(19) Europäisches Patentamt
European Patent Office
Office européen des brevets

(11) EP 0 466 577 B1

(12) **FASCICULE DE BREVET EUROPEEN**

(45) Date de publication et mention de la délivrance du brevet:
**08.05.1996 Bulletin 1996/19**

(51) Int Cl.$^6$: **C08B 31/12**, D21H 17/29

(21) Numéro de dépôt: **91401905.4**

(22) Date de dépôt: **09.07.1991**

(54) **Procédé de permutation ionique d'amidons ionisés**

Verfahren zum Ionenaustausch von ionischer Stärke

Process for ion-exchange of ionic starch

(84) Etats contractants désignés:
**AT BE CH DE DK ES GB GR IT LI NL SE**

(30) Priorité: **10.07.1990 FR 9008767**

(43) Date de publication de la demande:
**15.01.1992 Bulletin 1992/03**

(73) Titulaire: **Roquette Frères**
**F-62136 Lestrem (FR)**

(72) Inventeurs:
- **Fuertes, Patrick**
  **F-59130 Lambersart (FR)**
- **Dreux, Jean-Louis**
  **F-59940 Estaires (FR)**

(74) Mandataire: **Koch, Gustave et al**
**Cabinet PLASSERAUD**
**84, rue d'Amsterdam**
**75440 Paris Cédex 09 (FR)**

(56) Documents cités:
**EP-A- 298 920**
**EP-A- 326 517**
**EP-A- 0 051 337**
**EP-A- 0 233 336**
**EP-A- 0 277 633**
**GB-A- 936 039**
**US-A- 2 624 727**
**US-A- 2 992 215**
**US-A- 3 051 699**
**US-A- 3 136 646**
**US-A- 3 442 087**
**US-A- 3 562 103**
**US-A- 3 737 370**

Il est rappelé que: Dans un délai de neuf mois à compter de la date de publication de la mention de la délivrance du brevet européen, toute personne peut faire opposition au brevet européen délivré, auprès de l'Office européen des brevets. L'opposition doit être formée par écrit et motivée. Elle n'est réputée formée qu'après paiement de la taxe d'opposition. (Art. 99(1) Convention sur le brevet européen).

EP 0 466 577 B1

Printed by Jouve, 75001 PARIS (FR)

## Description

La présente invention a pour objet un procédé de permutation ionique d'amidon ionisé, c'est-à-dire d'amidon modifié avec des substituants ioniques associés à des contre-ions. L'amidon modifié obtenu par mise en oeuvre de ce procédé est aussi décrit.

L'amidon est un polymère constitué d'unités anhydro-glucose pouvant avoir différentes origines botaniques : blé, maïs, waxy-maïs, pomme de terre et autres. A l'état natif, il possède une structure granulaire, sensiblement cristalline et est insoluble dans l'eau froide.

Suivant sa provenance, l'amidon peut naturellement être plus ou moins ionisé. On sait par exemple qu'un amidon natif de tubercule tel que la fécule de pomme de terre comporte des groupements anioniques du type phosphates. Ce caractère anionique peut être mis à profit dans diverses applications de l'amidon.

Par ailleurs, on connaît la réaction de cationisation des amidons qui permet d'obtenir des amidons cationiques utiles notamment dans la fabrication du papier. On pourra se reporter par exemple au livre intitulé "Starch Chemistry and Technology" de R.L. Whistler et E.F. Paschall, chapitre 16 (Academic Press, 1967). L'emploi de ces amidons permet essentiellement d'augmenter la rétention des fibres et des charges, d'améliorer l'égouttage ainsi que les caractéristiques physiques du papier.

Ces amidons sont préparés par réaction de la molécule d'amidon avec des réactifs porteurs d'un site cationique et induisant l'apparition d'une charge positive. La liaison chimique en cause peut être du type éther ou ester, mais généralement la liaison éther est préférée étant donné sa meilleure stabilité. La plupart des amidons cationiques commercialisés actuellement sont préparés à l'aide de réactifs contenant de l'azote et étant du type amino-tertiaire ou ammonium quaternaire.

L'anionisation est également une technique connue pour greffer des substituants chargés négativement soit sur des amidons de tubercule déjà naturellement plus ou moins anionisés, soit sur des amidons non ionisés, soit encore sur des amidons cationiques de manière à les amphotériser. Une telle amphotérisation est réputée diminuer la sensibilité au pH.

Les groupements anioniques les plus couramment utilisés sont du type phosphates ou phosphonates.

Un procédé d'amphotérisation d'amidon est décrit dans le brevet US-A-3 562 103. Ce procédé comporte une étape de cationisation de l'amidon au moyen d'un réactif ammonium quaternaire, suivie d'une étape de greffage de groupements phosphates sur l'amidon cationique ; ce greffage est réalisé par chauffage à une température d'environ 145°C.

Ces techniques de cationisation et/ou anionisation font appel à la mise en présence, le plus souvent en milieu aqueux, d'amidon généralement sous forme granulaire, avec des réactifs cationiques ou anioniques suivant le cas, dont l'ion associé ou contre-ion (cation dans le cas des réactifs anioniques et anion dans le cas des réactifs cationiques) peut parfois engendrer des problèmes au moment de l'utilisation de l'amidon ionisé considéré.

On peut citer le cas des amidons cationiques qui sont généralement préparés par éthérification de l'amidon au moyen d'un réactif aminotertiaire ou ammonium quaternaire dont l'ion associé, ou contre-anion, est un halogénure, le plus souvent le chlorure.

Or, il est connu que les ions chlorure ont un caractère corrosif particulièrement marqué, ce qui peut s'avérer gênant dans certaines applications comme la fabrication du papier puisque les équipements peuvent être de ce fait sujets à une détérioration rapide.

Dans d'autres applications, l'effet agressif du contre-ion peut également se manifester à l'encontre des produits fabriqués, qui sont mis en contact avec les amidons ioniques ou qui en contiennent.

Hormis les problèmes entraînés par certains contre-anions ou contre-cations au niveau des applications des amidons ionisés, il faut savoir que ces éléments utiles pour neutraliser la charge des substituants ioniques desdits amidons peuvent interférer défavorablement, aussi bien dans les réactions permettant de préparer les réactifs ioniques que dans les réactions subséquentes d'éthérification ou d'estérification à l'aide de ces réactifs. Certains anions ou cations associés peuvent, en fonction de leur espèce chimique, exercer des forces d'attraction/répulsion électrochimiques susceptibles de modifier la réactivité lorsqu'il s'agit de préparer le réactif, ou avec l'amidon lors de l'ionisation. Cela entraîne des rendements de préparation faibles, d'où un coût économique important en ce qui concerne la préparation des amidons ionisés.

De nombreux brevets ont trait à la préparation d'amidons ionisés. Parmi ceux-ci, on peut citer le brevet français n° 2.434.821 au nom de la demanderesse décrivant un procédé de cationisation de l'amidon consistant à faire réagir de l'amidon granulaire avec un réactif amino-tertiaire, ammonium quaternaire, phosphonium quaternaire ou sulfonium tertiaire. La réaction est mise en oeuvre à une température de 20 à 90°C en présence d'un agent alcalin tel que la soude. Le contre-anion est choisi parmi les chlorures, les bromures et iodures. Il ressort de ce document que le réactif cationique le plus approprié pour la cationisation semble être celui associé à un contre-anion chlorure; ceci est confirmé par le fait que l'on ne retrouve presque exclusivement sur le marché que des réactifs de cationisation de ce type (et les amidons cationiques correspondants).

Or, malheureusement, comme on l'a vu précédemment, ce sont les chlorures qui, du fait de leur caractère agressif,

peuvent poser des problèmes dans certaines applications des amidons cationiques.

Le brevet US n° 3.422.087 décrit quant à lui un procédé de préparation d'éthers polysaccharidiques cationiques. Les substituants cationiques choisis sont du type alkylène amino-tertiaire ou ammonium quaternaire. Suivant ce procédé, la réaction est menée sur un amidon granulaire à l'état solide dans un milieu liquide réactionnel en quantité juste suffisante pour être totalement absorbée par les granules d'amidon, et en l'absence de base forte. Les agents éthérifiants cationiques seraient liés à de nombreux contre-anions inorganiques ou organiques dont il est donné une liste non limitative dans le brevet.Or si l'on se place à la date effective de ce document (1962), on peut considérer que la définition des contre-anions est trop extensive. En effet, à cette époque, il n'était pas possible de préparer les substituants cationiques avec des contre-anions de toute nature. Ceci est notamment le cas des phosphates ou de certains carbanions organiques du genre carboxylique. Le brevet ne contient aucune information susceptible de permettre à l'homme du métier de fabriquer de tels réactifs. On remarquera d'ailleurs que les seuls contre-anions associés aux substituants cationiques employés dans les exemples sont le p.tosylate et le chlorure.

De même, le document EP-A-233 336 décrit un procédé de préparation d'amidons cationiques. Selon ce brevet, les réactifs de cationisation sont constitués par des époxydes d'alkylène présentant un anion associé au radical ammonium tertiaire ou quaternaire. Il est mentionné que l'anion peut être choisi dans le groupe constitué par les chlorures, les bromures, les sulfates ou les acétates. Cependant, seuls les réactifs présentant un chlorure comme étant l'anion associé sont exemplifiés.

Il faut également considérer que la réaction d'ionisation, et en particulier de cationisation, de l'amidon ne présente pas une efficacité ou un rendement réactionnels équivalents quel que soit le réactif d'ionisation utilisé.

Il s'avère donc qu'il n'est pas aisé de préparer des amidons ionisés comportant des contre-charges de toute nature chimique.

Cela a pourtant été l'une des préoccupations de l'homme de l'art que de résoudre ce problème de la présence d'ions indésirables comme les chlorures dans les réactifs de cationisation et dans les amidons cationiques ou de pouvoir préparer aisément et avec un bon rendement des amidons ioniques comportant des ions associés choisis.

Il a ainsi été proposé dans la demande de brevet EP n° 0 51 337 de transformer les réactifs de cationisation du type halogénures de glycidyltriméthylammonium (G.T.A.) en réactifs du type sulfates de glycidyltriméthylammonium à l'aide d'une résine échangeuse d'ions. On a pu constater que la réactivité de ces sulfates de GTA dans la cationisation n'était pas aussi bonne que celle des chlorures de GTA. De plus on se limite ici à un contre-anion bien précis, la conversion par échange d'ions n'étant pas applicable à tous les anions.

Par ailleurs, cette technique nécessite le recours à un réactif de forme époxyde. Or, on sait que les réactifs époxydes sont très onéreux, instables et agressifs, donc gênants à manipuler. A l'instar de toutes les techniques intervenant plus spécifiquement au niveau du réactif de cationisation, la solution préconisée par cette demande de brevet EP n° 0 51 337 n'apparaît pas comme étant satisfaisante.

Un procédé de permutation des cations associés aux groupements phosphates d'amidons natifs a déjà été proposé dans les documents EP-A-298 920 et EP-A-326 517. Cependant, ce procédé ne permet pas de réaliser en une seule étape la permutation des contre-ions associés à l'amidon. Il comporte deux étapes : une étape de lavage à l'acide destinée à remplacer les cations associés aux groupements phosphates par des ions $H^+$ suivie d'une étape de neutralisation destinée à remplacer les ions $H^+$ par des cations monovalents ou divalents choisis dans le groupe constitué par $Na^+$, $K^+$, $Ca^{2+}$, $Mg^{2+}$, $NH_4^+$.

L'un des objets de la présente invention est de remédier aux inconvénients des techniques de l'art antérieur.

Après de nombreuses études et recherches, la Société demanderesse a eu le mérite de trouver qu'il était possible de préparer des amidons substitués par des groupements chargés électriquement et présentant des contre-ions associés particuliers et préalablement sélectionnés, en procédant à un lavage de l'amidon ionisé sous forme solide granulaire, en une seule étape, à l'aide d'une solution contenant des ions permutants de manière à ce que les contre-ions présents sur l'amidon soient remplacés en tout ou partie par lesdits ions permutants.

Il s'ensuit que le procédé de permutation ionique d'amidon ionisé, c'est-à-dire d'amidon modifié avec des substituants ioniques associés à des contre-ions, conforme à l'invention, est caractérisé en ce qu'il consiste à effectuer la permutation des contre-ions en une seule étape de lavage de l'amidon sous forme solide granulaire, à l'aide d'une solution contenant un ou plusieurs ions permutants aptes à remplacer en tout ou partie les contre-ions, ces ions permutants étant des cations et/ou des anions de nature organique et/ou inorganique choisis, en ce qui concerne les anions, dans le groupe comprenant les ions halogénure, nitrate, nitrite, sulfate, sulfite, thiosulfate, acétate, adipate, citrate, gluconate, p-tosylate, formiate, propionate, phosphate, borate, thiocyanate et sulfonate, et en ce qui concerne les cations, dans le groupe comprenant les ions sodium, potassium, magnésium, calcium, baryum, manganèse, fer, nickel et plomb.

Le fait que la permutation ionique par lavage conforme à l'invention se déroule de façon extrêmement efficace, et au surplus rapide, apparaît tout à fait surprenant et inattendu. Compte tenu de la structure granulaire et compacte de l'amidon, on ne pouvait en effet pas prévoir que la solution contenant les ions permutants traverse aussi aisément et rapidement l'amidon ionisé, et surtout que lesdits ions s'échangent avec les contre-ions présents sur l'amidon avec

un rendement aussi élevé. On a pu en effet mesurer que ce rendement était généralement supérieur à 80 %, voire 90 %.

Le procédé de permutation ionique conforme à l'invention permet de préparer, à partir d'un amidon ionisé quelconque comportant des contre-ions donnés, un nouvel amidon ionisé dont les contre-ions peuvent être choisis au préalable en fonction de l'application finale visée.

Comme cela a été envisagé précédemment, il peut être intéressant de prévoir des ions permutants de diverses espèces chimiques pour la solution de lavage.

Du fait de sa rapidité et de son haut rendement d'échange ionique, ce procédé est en parfaite adéquation avec les impératifs industriels d'économie et de rentabilité.

La qualité des amidons qu'il permet d'obtenir est tout-à-fait comparable à celle des amidons pouvant être fabriqués par les procédés classiques de cationisation ou anionisation.

En fin de permutation, on récupère, d'une part, la solution de lavage contenant les contre-charges initialement liés à l'amidon et, d'autre part, l'amidon ionisé permuté qui peut éventuellement être filtré puis séché.

Les amidons ionisés mis en oeuvre dans le cadre de l'invention peuvent provenir de toute origine. Il peut s'agir d'amidons de céréales (mais, waxy-mals, blé et autres) et/ou d'amidons de tubercules (fécule de pommes de terre, manioc et autres).

Le caractère ionique de l'amidon ionisé soumis à la permutation peut provenir d'un traitement de cationisation ou d'anionisation d'un type connu en soi et consistant en un greffage, par liaison éther ou ester, de substituants électriquement chargés sur des hydroxyles de l'amidon. On se référera par exemple à la cationisation de l'amidon décrite dans le brevet FR n° 2.434.821 au nom de la demanderesse. Mais il va de soi que cela ne saurait constituer une limitation à la présente invention, étant entendu que tout amidon modifié présentant un caractère ionique conviendrait parfaitement.

La solution de lavage employée dans le procédé suivant l'invention est de préférence constituée au moins partiellement par de l'eau. Il s'agit naturellement d'eau à teneur réduite en ions de nature différente de celle des ions permutants choisis et utilisés dans le cadre du procédé conforme à l'invention. L'eau est éventuellement additionnée d'un ou plusieurs solvants non aqueux choisis par exemple parmi les alcools ou les cétones.

L'emploi d'un ou plusieurs cosolvants peut être utile dans la mesure où l'amidon ionisé à permuter présente un degré de substitution élevé et a, de ce fait, une tendance à la solubilisation dans l'eau froide.

La quantité d'ions permutants dans la solution de lavage dépend directement de la quantité de contre-charges ou contre-ions que l'on souhaite substituer.Pour obtenir une substitution des contre-charges supérieure ou égale à 70 % (rendement de permutation), de préférence sensiblement totale des contre-charges, il convient de prévoir un rapport stoechiométrique ions permutants/contre-charges supérieur ou égal à 1:1,et plus préférentiellement encore compris entre 1,1:1 et 1,3:1.

Il va de soi que l'on ajustera ce rapport à la baisse en ce qui concerne les ions permutants, si l'on ne veut effectuer qu'une substitution partielle. La rapidité de la permutation dépend quant à elle notamment de la quantité de solution de lavage employée par rapport à celle d'amidon à permuter et aussi du nombre d'opérations de lavage.

Avantageusement, le procédé de permutation est mis en oeuvre à l'aide d'une solution de lavage dont la température est inférieure à 60°C. Préférentiellement elle correspond sensiblement à la température ambiante.

Suivant un premier mode de mise en oeuvre du procédé suivant l'invention, la permutation s'effectue par l'intermédiaire d'au moins un lavage consistant à mettre en contact la solution de lavage avec l'amidon ionisé puis à soumettre ce mélange à une séparation par gradient de densité de manière à récupérer d'une part la solution de lavage enrichie en contre-charges extraites et d'autre part l'amidon ionisé granulaire associé avec les ions permutants.

Dans une variante de ce premier mode de mise en oeuvre, l'opération de lavage est effectuée à l'aide d'au moins un hydrocyclone de forme conique. La solution de lavage et l'amidon ionisé sont injectés sous pression à l'intérieur de l'hydrocyclone où ils subissent un mouvement tourbillonnaire permettant une mise en contact et une séparation entre un surnageant (over-flow) contenant des contre-charges et un culot (under-flow) constitué par l'amidon au moins partiellement permuté.

De manière avantageuse, il peut être prévu une batterie comportant plusieurs hydrocyclones montés en série et équipée d'un circuit de circulation de solution de lavage à contre-courant, ce circuit étant agencé de telle sorte que l'alimentation en solution de lavage se fasse sur l'hydrocyclone disposé en fin de batterie, tandis que l'alimentation en amidon à permuter se fait sur l'hydrocyclone disposé en tète de batterie. Le surnageant de chaque hydrocyclone est susceptible d'alimenter au moins l'un des hydrocyclones précédents de la batterie.

Les dispositifs à hydrocyclone utilisables pour mettre en oeuvre le procédé suivant l'invention sont tout à fait connus dans le domaine du génie chimique propre à l'industrie amidonnière. Leur adaptation au procédé de permutation ne présente pas de difficulté pour l'homme du métier.

On trouve ainsi aux pages 5 et 120 à 129 de l'ouvrage intitulé "Starch Production Technology" écrit par J.A. Radley "Applied Science publishers Ltd" 1976, des explications sur la structure et le fonctionnement d'un hydrocyclone. La figure 7-4 de la page 120 de cet ouvrage donne un schéma simplifié d'une batterie d'hydrocyclones avec circulation d'eau de lavage à contre-courant.

L'ouvrage "Starch : Chemistry and Technology" écrit par R.L. Whistler & E.F. Paschall, volume II, "Academic Presse" expose également aux pages 42-44 le principe de fonctionnement d'un hydrocyclone et d'une batterie d'hydrocyclones.

Conformément à une autre variante de ce premier mode de mise en oeuvre, l'opération de lavage est effectuée à l'aide d'au moins un dispositif du type centrifugeuse ou décanteuse apte à mélanger la solution de lavage et l'amidon ionisé, à permuter et à séparer une solution enrichie en contre-ions extraits constituant le surnageant, de l'amidon au moins partiellement permuté constituant le culot.

Il est clair que, tout comme précédemment, l'on peut aussi prévoir un agencement en ligne de plusieurs dispositifs du type centrifugeuse ou décanteuse pour réaliser l'opération de lavage, éventuellement avec circulation à contre-courant de la solution de lavage.

Un dispositif de centrifugation à assiettes approprié et connu en soi, du type de ceux commercialisés par la Société Merco, convient parfaitement pour la mise en oeuvre du procédé. L'ouvage "Starch Production and Technology" précité présente dans sa page 129 un schéma en coupe partielle expliquant le principe de fonctionnement d'un tel dispositif de centrifugation.

Suivant un deuxième mode de mise en oeuvre du procédé suivant l'invention, on fait migrer la solution de lavage au travers d'une masse d'amidon ionisé.

Cette migration ou percolation de la solution de lavage peut être réalisée par différents moyens.

Un premier moyen consiste à recourir à un filtre tambour rotatif sous vide. Ce dispositif comprend un tambour cylindrique creux entraînable en rotation autour de son axe et disposé à l'intérieur d'une cuve prévue pour contenir une suspension ou lait d'amidon ionisé à permuter. La paroi du tambour joue le rôle d'un filtre apte à retenir l'amidon. Sont prévus également des moyens de pulvérisation de la solution de lavage agencés de façon à pouvoir projeter ladite solution sur la partie de la paroi du tambour non immergée et se présentant en regard de l'ouverture de la cuve. Lors du fonctionnement, l'intérieur du tambour est mis sous vide de sorte qu'après mise en rotation du tambour une fine couche ou "gâteau" d'amidon se trouve plaquée sur toute la surface de la paroi-filtre du tambour. La solution de lavage est projetée sur le gâteau" lorsque celui-ci circule dans la zone non immergée du tambour. La fraction liquide est entraînée par le vide à l'intérieur du tambour pour être ensuite acheminée vers l'extérieur par des moyens d'évacuation.

Après avoir parcouru toute la zone non immergée et subi la pulvérisation, le gâteau d'amidon lavé et permuté est collecté par un couteau racleur disposé au contact du tambour suivant l'une de ses génératrices.

Il est bien entendu possible de faire varier l'épaisseur de la couche d'amidon en modulant le vide, le débit des moyens de pulvérisation, ainsi que la vitesse de rotation du tambour.

Tous ces ajustements sont à la portée de l'homme du métier. Ils lui permettent d'assurer l'optimisation du procédé de permutation.

Un autre moyen de réaliser la percolation de la solution de lavage au travers de l'amidon à permuter est d'employer une essoreuse à tambour. Ce type de dispositif bien connu permet, par centrifugation d'un lait d'amidon, de former un gâteau d'amidon sur les parois intérieures du tambour d'essorage. Il suffit de prévoir des moyens de pulvérisation de la solution de lavage au niveau de l'axe dudit tambour, de façon à permettre l'imprégnation du gâteau par la solution de lavage, la migration de celle-ci au travers dudit gâteau, puis son évacuation dans la cuve contenant le tambour d'essorage, de la même manière que la phase liquide du lait d'amidon.

Au terme de l'essorage, on récupère un amidon ionisé parfaitement permuté.

Conformément à une disposition avantageuse de l'invention, l'amidon ionisé mis en oeuvre est un amidon cationique obtenu par réaction, en milieu alcalin, d'un amidon granulaire avec un réactif cationique dont le contre-anion est un halogénure.

Etant donné l'efficacité reconnue et confirmée des réactifs cationiques à base de chlorures, comme l'atteste d'ailleurs leur présence commerciale presque exclusive sur le marché, le contre-anion choisi est avantageusement un chlorure.

De préférence on utilise un réactif cationique tel que le chlorure de 3 chloro-2 hydroxypropyltriméthylammonium du type de celui commercialisé par la Société Degussa sous la dénomination QUAB 188.

En plus de tous les amidons ionisés obtenus directement par le procédé de permutation décrit précédemment, la présente invention permet d'obtenir des amidons cationiques dont les contre-anions sont constitués, au moins en partie, par des ions du type phosphate et/ou des ions du type carboxylate.

Au sens de la présente invention, le terme phosphate désigne tous les anions dérivant de l'acide phosphorique par exemple sous forme méta, pyro, ortho, tripoly, triméta et autres, de préférence sous forme ortho et poly. Il s'agit par exemple des anions $PO_4^{3-}$, $PO_4X^{2-}$, $PO_4XX'^{-}$, $PO_4Y^{-}$, X et X' étant des cations monovalents (notamment $Na^+$, $K^+$) et Y un cation divalent (notamment $Ca2^+$, $Mg2^+$).

L'ion carboxylate peut être choisi dans la liste non limitative suivante : adipate, citrate, gluconate...

Les amidons cationiques à contre-anions phosphate et/ou carboxylate n'ont jamais pu être fabriqués auparavant, du fait de l'impossibilité de préparer des réactifs de cationisation présentant ces contre-charges et/ou de réaliser la

cationisation.

Les amidons ionisés obtenus par le procédé conforme à l'invention peuvent notamment être appliqués dans l'industrie du papier, dans l'industrie textile ou dans l'industrie cosmétique.

De toute façon, l'invention sera mieux comprise à l'aide des exemples de mise en oeuvre de la permutation ionique et d'application des produits obtenus qui suivent, donnés à titre de compléments d'information, et qui ne sont donc pas limitatifs.

EXEMPLE I

**Permutation ionique par des ions permutants du type phosphate d'une fécule cationique suivant le procédé conforme à l'invention.**

a) Cationisation de la fécule

Dans un réacteur de 4 $m^3$ pourvu de moyens d'agitation, on introduit un lait de fécule de pomme de terre obtenu par dispersion de 1000 kg de fécule à 80 % de matières sèches dans 1200 l d'eau. On ajoute ensuite 105 kg d'une solution à 50 % de matières sèches de chlorure de 3 chloro-2 hydroxypropyltriméthylammonium commercialisé sous la dénomination QUAB 188 par la Société Degussa, puis 560 l d'une solution de soude caustique diluée à 40 g/l.

La réaction est menée à une température maintenue à 38°C pendant environ 15 heures.

On effectue alors une neutralisation à l'aide d'acide phosphorique de façon à ajuster le pH du milieu réactionnel vers 7,0-8,0.

Le volume total de lait de fécule cationique à 33 % de matières sèches obtenu est de 2,3 $m^3$.

Des analyses effectuées sur un prélèvement permettent de déterminer le taux d'azote fixé sur la fécule (méthode Kjedahl). Celui-ci s'élève à 0,37 % en poids mesuré sur produit sec, soit 2,57 x $10^{-2}$ M pour 100 g.

La quantité totale de chlorures présents dans le lait de fécule cationique obtenu atteint 2,4 % en poids exprimé sur sec. Une fraction de ces chlorures peut être éliminée par simple lavage à l'eau.

En revanche, la fraction des chlorures présents associés à l'azote quaternaire de façon équimolaire et qui correspond à 0,94 % en poids sur sec de la fécule, soit 2,57 x $10^{-2}$ mole pour 100 g, ne peut être éliminée par une telle opération.

b) Permutation ionique conforme à l'invention

Dans le but d'effectuer une permutation entre ces chlorures et des ions phosphates, on prépare tout d'abord 5,3 $m^3$ d'une solution de phosphate disodique à 0,7 %.

La quantité totale de phosphates employée est de 37 kg, ce qui donne un rapport stoechiométrique molaire phosphates/chlorures de 1,2:1.

L'excès en agents permutants n'est donc que de 20%.

Conformément au procédé suivant l'invention, le lait de fécule cationique est lavé à contre-courant avec cette solution de lavage diluée de phosphate disodique sur une batterie d'hydrocyclones à 7 étages, chaque étage comportant une pluralité d'hydrocyclones coniques.

On récupère ainsi à la sortie de cette batterie un lait de fécule cationique permutée par les contre-anions phosphates et la solution de lavage chargée en chlorures.

Le lait de fécule cationique permutée est soumis ensuite à des opérations de filtration et de séchage permettant d'obtenir la fécule sous une forme pulvérulente dans laquelle elle peut être conditionnée.

L'analyse du produit fini révèle un taux résiduel de chlorures très faible, de l'ordre de 0,06 % en poids sur sec. Le rendement d'échange ionique est particulièrement bon puisqu'il s'élève à (0,94 - 0,06) x 100 / 0,94 = 94 %, ce qui signifie que 94 % des chlorures initialement liés à la fécule ont été substitués par des phosphates.

Il faut remarquer qu'outre ces performances tout à fait remarquables, le procédé conforme à l'invention présente une simplicité et une rapidité de mise en oeuvre très appréciables. En effet, la batterie d'hydrocyclones utilisée est un dispositif peu coûteux et courant en amidonnerie qui permet de procéder à la permutation en quelques heures seulement (4 à 5 heures pour cet exemple).

Sachant que le volume utile de chaque étage d'hydrocyclones employé dans le cadre du présent exemple est de l'ordre de 1,5 l et compte tenu du débit des fluides, le temps de séjour moyen dans un étage d'hydrocyclones n'est que de 2 à 3 secondes.

EXEMPLE II

**Essai d'élimination des chlorures présents dans une fécule cationique identique à celle obtenue dans l'exemple I.a sans utiliser le procédé conforme à l'invention.**

La fécule cationique avec contre-anions chlorures employée est celle obtenue dans l'exemple I.a par réaction de la fécule avec du QUAB 188.

Elle comporte 2,4 % en poids sur sec de chlorures, dont 0,94 % en poids sur sec de chlorures associés à l'azote quaternaire de façon équimolaire.

Le lait de fécule cationique est soumis à un lavage à l'eau (à teneur réduite en ions) dans la même batterie d'hydrocyclones que celle de l'exemple I.b.

Après filtration et séchage du lait de fécule cationique obtenu, on mesure un taux de chlorures résiduels de l'ordre de 0,90 % en poids sur sec.

Ce résultat démontre que les ions chlorures associés ioniquement à l'azote ne peuvent pas être éliminés par simple lavage à l'eau.

EXEMPLE III

**Permutation ionique par des ions permutants du type phosphate d'un amidon cationique d'origine waxy-maïs, suivant le procédé conforme à l'invention.**

a) Cationisation

Dans un réacteur de 4 $m^3$ pourvu de moyens d'agitation, on introduit un lait d'amidon waxy-maïs obtenu par dispersion de 1000 kg d'amidon waxy à 87 % de matières sèches dans 1300 l d'eau. On ajoute ensuite 100 kg d'une solution à 50 % de matières sèches de chlorure de 3 chloro-2 hydroxypropyltriméthylammonium commercialisé sous la dénomination QUAB 188 par la Société Degussa, puis 600 l d'une solution de soude caustique diluée à 40 g/l.

La réaction est menée à une température maintenue à 38°C pendant environ 15 heures.

On effectue alors une neutralisation à l'aide d'acide phosphorique de façon à ajuster le pH du milieu réactionnel vers 7,0-8,0.

Le volume total de lait d'amidon à 33 % de matières sèches obtenu est de 2,3 $m^3$.

Des analyses effectuées sur un prélèvement permettent de déterminer le taux d'azote fixé sur la fécule (méthode Kjedahl). Celui-ci s'élève à 0,32 % en poids mesuré sur produit sec, soit 2,29 x $10^{-2}$ M pour 100 g.

La quantité totale de chlorures présents dans le lait d'amidon obtenu atteint 2, 2 % en poids exprimé sur sec. Une fraction de ces chlorures peut être éliminée par simple lavage à l'eau.

En revanche, la fraction des chlorures associés à l'azote quaternaire de façon équimolaire et qui correspond à 0,91 % en poids sur sec soit 2,29 x $10^{-2}$ mole pour 100 g, ne peut être éliminée par une telle opération.

b) Permutation ionique conforme à l'invention

On prépare tout d'abord 5,8 $m^3$ de solution de lavage constituée par une solution aqueuse de phosphate disodique à 0,6 % en poids. Ceci équivaut à un quantité totale de phosphate de 35 kg, soit un rapport molaire phosphates/chlorures associés uniquement à l'azote de 1,1: 1.

Le lait d'amidon waxy cationique est ensuite lavé à contre-courant par cette solution aqueuse de phosphate dans une batterie d'hydrocyclones de la même façon que dans l'exemple I.b.

Le lait d'amidon waxy cationique permuté est filtré, le rétentat de filtration étant ensuite séché.

La teneur en chlorures de cet amidon cationique n'est plus que de 0,05 % en poids sur sec, ce qui correspond à un rendement d'échange ionique de (0,91 - 0,05) x 100 / 0,91 = 95 %. Seuls 5 % des chlorures initiaux sont toujours présents.

Il va de soi que les protocoles de mise en oeuvre employés dans cet exemple III et dans l'exemple I correspondent à un équilibre entre l'efficacité de la permutation et la rentabilité économique, cet équilibre étant une condition nécessaire à une exploitation industrielle. Mais pour optimiser le procédé sur le plan pilote, il suffirait de multiplier les étages de lavage pour parvenir à un rendement proche de 100 %.

EXEMPLE IV

**Permutation ionique par des ions permutants du type sulfate d'une fécule cationique à contre-anions chlorures, suivant le procédé conforme à l'invention.**

a) Cationisation

La fécule cationique est préparée de la même manière que celle décrite dans l'exemple I.a, à la seule différence que l'opération de neutralisation du lait de fécule est menée jusqu'à un pH de 5,0-7,0 à l'aide d'acide sulfurique.

On obtient ainsi 2,6 $m^3$ de lait de fécule cationique à contre-anions chlorures à 33 % de matières sèches.

ces contre-anions chlorures représentent 0,94 % en poids sur sec de la fécule.

b) Permutation ionique conforme à l'invention

La solution de lavage employée est une solution aqueuse de sulfate de sodium à 0,7 % en poids. On en prépare 5,3 $m^3$, ce qui équivaut à 37 kg de sulfate.

Le rapport molaire sulfates/chlorures (contre-anions) est de 1,2:1, soit 20 % de sulfate en excès.

Après lavage sur batterie d'hydrocyclones, filtration et séchage conformément au protocole défini à l'exemple I.b, on récupère une fécule cationique permutée par des ions sulfates dont la teneur en chlorures est de 0,08 % en poids. Le rendement d'échange ionique est donc de (0,94 - 0,08) x 100 / 0,94 = 92 %.

EXEMPLE V

**Permutations ioniques par percolation d'une fécule cationique à contre-anions chlorures par des ions permutants du type phosphate, suivant le procédé conforme à l'invention.**

1) Essai A

La matière première utilisée est un amidon ionisé commercialisé sous la marque déposée HI-CAT 142 par la demanderesse. Il s'agit d'une fécule cationique possédant 3,78 % en poids exprimé sur sec de groupe oxy-3-hydroxy-2 propyltriméthylammonium sous forme chlorure :

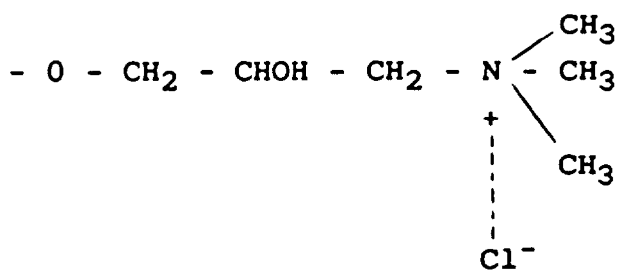

ce qui représente 0,89 % en poids sur sec d'ions chlorures liés à l'ammonium.

On disperse sous agitation 500 g de HI-CAT 142 à 83 % de matières sèches dans 610 g d'eau, ce qui équivaut à 0,104 mole $Cl^-$ liées à l'ammonium. Le lait de fécule obtenu est essoré sous vide sur un filtre ou Büchner en verre fritté de porosité 2 et de diamètre 132 mm. Ce Büchner fait partie intégrante d'un entonnoir dont le corps de forme cylindrique est pourvu d'un prolongement tubulaire emmanché sur un erlenmeyer destiné à recevoir le filtrat et équipé dans sa partie supérieure d'un raccord tubulaire par l'intermédiaire duquel il est possible de mettre sous vide le dispositif.

Après essorage, on obtient un gâteau de 6 cm d'épaisseur, ce qui correspond à un volume de 820 $cm^3$.

On fait percoler rapidement au travers du gâteau, 2200 g d'une solution de lavage contenant du phosphate disodique ($Na_2HPO_4$) à 0,7 %, soit 15,4 g anhydre ou 0,108 mole en appliquant un vide de 0,9 bar (rapport stoechiométrique molaire phosphates/chlorures 1,04:1). La durée totale de passage des 2200 g de solution de lavage est de 14 minutes, ce qui fait un débit de solution de lavage égal à 11,5 volumes de gâteau par heure. Le gâteau bien essoré est séché en lit fluidisé jusqu'à atteindre une teneur en eau de 17,6 % en poids. Sa teneur résiduelle en chlorure est inférieure à 0,001 % en poids sur sec, ce qui donne un rendement de permutation optimisé supérieur à (0,89 - 0,001) x 100 / 0,89 = 99,9 %.

Cet essai met bien en évidence l'efficacité du procédé de permutation suivant l'invention qui permet une substitution totale des contre-anions, quelle que soit leur nature, par des anions différents tels que les phosphates, les sulfates ou les carbanions d'acides organiques.

Il est également intéressant de noter la rapidité avec laquelle ce procédé peut être mis en oeuvre. Dans le présent

essai, la vitesse de passage au travers du gâteau est en effet de l'ordre de 69 cm/heure.

2) Essais B, C, D

Ces essais sont réalisés dans les mêmes conditions que celles définies ci-dessus pour l'essai A, sauf en ce qui concerne la quantité de solution de lavage contenant les phosphates, et pour l'essai D, la quantité de phosphates employée.

Les données et les résultats de ces essais B, C et D sont indiqués dans le tableau 1 qui suit :

TABLEAU 1

| | B | C | D |
|---|---|---|---|
| Quantité de $Cl^-$ liés à l'ammonium quaternaire (en % en poids sur sec) | 0,89 | 0,89 | 0,89 |
| Quantité de solution de lavage ($Na_2HPO_4$) employée pour 500g d'amidon à 83 % de matières sèches à percoler (en g ) | 550 | 154 | 550 |
| Concentration en $Na_2HPO_4$ dans la solution de lavage ( en % en poids) | 2,8 | 10 | 1,4 |
| Rapport stoechiométrique molaire phosphates/chlorures pour la permutation | 1,04:1 | 1,04:1 | 0,52:1 |
| Temps de passage de la solution sur Bűchner (en secondes) | 50 | 35 | 110 |
| Rendement de permutation (en %) | 99,9 | 88,4 | 84 |

Dans l'essai D, on a procédé à une substitution partielle des chlorures par les phosphates puisque le rapport stoechiométrique phosphates/chlorures n'est que de 0,52:1.

Le rendement de permutation est alors de 84 %.

Pour un même rapport stoechiométrique (essais B et C), on a fait varier la quantité de solution de lavage destinée à la percolation. On constate qu'en diminuant la quantité de solution de 550 g à 154 g on diminue le temps de percolation de 150 secondes à 35 secondes, mais on entraîne aussi une baisse du rendement de permutation de 99,9 % à 88,4 %.

EXEMPLE VI

**Permutations ioniques par percolation d'une fécule cationique à substituant amino-tertiaire associé à un chlorure, par des ions permutants du type phosphate**

La matière première utilisée est une fécule cationique commercialisée sous la dénomination HI-CAT DEC par la Société demanderesse. Il s'agit d'une fécule cationique substituée par des groupes oxy-3-hydroxy-2-propyl diéthylamine sous forme chlorure :

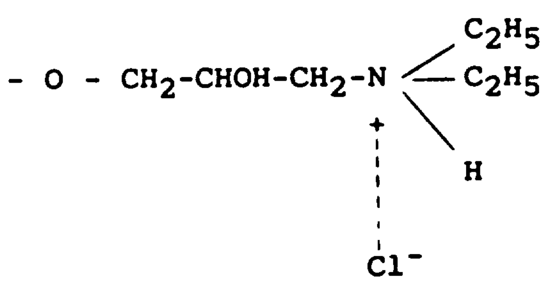

Elle comprend 1,03 % en poids sur sec d'ions chlorures liés à l'amine tertiaire.

On a réalisé deux essais E et F en respectant le protocole opératoire de l'exemple V.

Les données et les résultats de ces essais sont identiques dans le tableau 2 ci -dessous.

TABLEAU 2

| | Essai E | Essai F |
|---|---|---|
| Quantité de $Cl^-$ liés à l'amine tertiaire (en % en poids sur sec) | 1,03 | 1,03 |
| Concentration en phosphate disodique ($HNa_2PO_4$) de la solution de lavage (en % en poids) | 0,7 | 0,6 |

| | Essai E | Essai F |
|---|---|---|
| Rapport stoechiométrique molaire phophates/chlorures pour la permutation | 1,08:1 | 0,925:1 |
| Temps de passage de la solution de lavage sur Büchner avec vide cassé (en min.) | 41 | 43 |
| Rendement de permutation (en %) | 97,8 | 87,2 |

Les résultats des essais E et F montrent que la permutation conforme à l'invention s'opère également très bien sur une fécule cationique à substituant amino-tertiaire.

On constate que le fait d'utiliser un vide partiel inférieur à celui de l'exemple V (= 0,9 bar) n'a pratiquement pas d'influence sur l'efficacité de la permutation, seule la durée est quelque peu plus longue : 40 minutes environ contre 14 minutes.

Dans l'essai F, il est procédé à une permutation partielle puisque le rapport phosphates/chlorures n'est que de 0,925:1. Le rendement de permutation est ainsi de l'ordre de 87 %.

EXEMPLE VII

**Permutations ioniques par percolation d'une fécule cationique à contre-anions chlorures par des ions permutants organiques (carboxylates) et inorganiques (sulfites)**

Dans cet exemple, on réalise pour quatre essais G, H, I, J, une percolation suivant le même protocole opératoire que dans l'exemple V, à la différence que les 2200 g de solution de lavage contiennent 0,11 M :

- d'adipate de sodium pour l'essai G
- de citrate de sodium pour l'essai H
- de gluconate de sodium pour l'essai I
- de sulfite de sodium pour l'essai J.

Concernant les essais G et H, il faut noter qu'après percolation de la solution de lavage le gâteau de fécule HI-CAT 142 permuté est neutralisé à pH 7 par une solution de soude caustique.

Comme dans l'exemple V, la fécule cationique HI-CAT 142 à permuter contient 0,89% en poids sur sec de chlorures liés à l'ammoniac, soit 0,104 M dans les 500 g traités.

Les rapports stoechiométriques molaires contre-anions/chlorures dans les essais G à J sont donc tous de 1,06:1.

Les résultats sont présentés dans le tableau 3 ci-dessous.

TABLEAU 3

| | G | H | I | J |
|---|---|---|---|---|
| Temps de passage de la solution de lavage sur Büchner (en min.) | 13 | 18 | 14 | 14 |
| Rendement de permutation en % | 99,9 | 99,9 | 86,1 | 99,9 |

Les hauts rendements de permutation observés pour ces essais G à J montrent bien l'efficacité du procédé suivant l'invention aussi bien pour des contre-anions organiques, comme les carboxylates, que pour des contre-anions inorganiques, comme les sulfites.

EXEMPLE VIII

**Permutation ionique par percolation d'une fécule anionique à contre-cations sodiques par des ions permutants du type potassium, suivant le procédé conforme à l'invention**

La matière première utilisée est une fécule anionique à substituant carboxyméthyle sous forme sodique :

$$- O - CH_2 - COO^- \ ...\ ^+Na$$

Cette fécule anionique est du type de celles décrites dans l'ouvrage "Modified Starches Properties and uses" - O. B. Wurzburg - CRC Press, aux pages 187-188.

Elle comprend environ 1,5 % en poids sur sec de substituant carboxyméthyle, ce qui représente 0, 42 % en poids sur sec d'ions sodium.

Pour effectuer la permutation ionique, on respecte le protocole opératoire défini dans l'exemple V, essai A.

La solution de lavage est dans ce cas constituée par 1144 g d'une solution aqueuse de chlorure de potassium (KCl) à 0,5 %, soit 5,72 g anhydre ou 0,0767 mole pour 0,073 mole de sodium $Na^+$ dans les 500 g de fécule anionique à 20 % de matières sèches.

Le rapport stoechiométrique molaire potassium/ sodium est donc de 1,05:1.

A l'issue de la percolation, on mesure une teneur résiduelle en sodium de 0,004 % en poids, ce qui donne un rendement de permutation de 99,0 %.

On a montré ici que le procédé de permutation conforme à l'invention est tout aussi performant sur des amidons anioniques que sur des amidons cationiques.

EXEMPLE IX

**Essais d'application d'amidons permutés au phosphate obtenus par le procédé conforme à l'invention dans la fabrication de papier**

Dans cet exemple, on a réalisé deux séries d'essais de préparation de pâte à papier en utilisant des amidons cationiques classiques, c'est-à-dire comportant des chlorures associés aux substituants azotés cationiques, et des amidons permutés au phosphate obtenus conformément à l'invention.

Une première série d'essais a été effectuée en milieu neutre, et la seconde en milieu acide.

Six échantillons différents d'amidon cationique ont été testés :

- échantillon 1 : amidon cationique HI-CAT 142 commercialisé par la Société demanderesse (voir exemple V) comportant 1,32 % en poids sur sec de chlorures (sous forme associée et sous forme libre);
- échantillon 2 : amidon cationique HI-CAT 142 comprenant 0,89 % en poids sur sec de chlorures (sous forme associée);
- échantillon 3 : amidon cationique HI-CAT 142 permuté conformément à l'invention par du phosphate monosodique (contre-anion = $H_2PO_4^-$), comprenant 0,206 % en poids sur sec de chlorures associés résiduels (redement permutation = 77 %);
- échantillon 4 : semblable à l'échantillon 3, mais ne comportant plus que 0,100 % en poids sur sec de chlorures associés résiduels (rendement permutation = 89 %);
- échantillons 5 et 6 : amidon cationique HI-CAT 142 permuté conformément à l'invention par du phosphate disodique (contre-anion = $HPO_4^{--}$), comprenant moins de 0,001 % en poids sur sec de chlorures associés résiduels (rendement de permutation = 99,9 %).

Pour chaque série d'essais, on a utilisé comme matériau de départ un mélange 50/50 de pâte à la soude fibres longues et de pâte à la soude fibres courtes, auquel on a ajouté une charge à base de kaolin grade B et de la colle préparée par cuisson d'amidon cationique.

Après raffinage et mélange des différents constituants à l'aide de dispositifs conventionnels, on produit une toile de pâte à papier qui sert de base à la fabrication de la feuille de papier.

Chaque série d'essais comprend douze essais dont six ont été effectués suivant un mode de mise en oeuvre dénommé circuit court, dans lequel la colle d'amidon cationique est incorporée en fin de chaîne de mélange, tandis que les six autres essais ont été effectués suivant un mode de mise en oeuvre dénommé circuit long, dans lequel on

utilise un adjuvant supplémentaire de nature synthétique, comme par exemple le PERCOL 292, qui est introduit en fin de chaîne de mélange, alors que l'incorporation de la colle d'amidon cationique se fait en tête de chaîne.

On précisera encore que dans la deuxième série d'essais se déroulant en milieu acide, la pâte est additionnée de sulfate d'alumine et le pH est maintenu à 4,5 à l'aide d'acide sulfurique.

Pour apprécier l'influence des différents échantillons d'amidon sur la toile de pâte à papier et donc in fine sur le papier obtenu, on a déterminé, d'une part, la rétention sur toile qui est significative de la perte en agent de charge et en fines fibres, et d'autre part, la rétention en agent de charge de la toile.

Les résultats des deux séries d'essais sont présentés ci-dessous.

1) Essais en milieu neutre

a) Circuit court

L'amidon cationique est ici dosé à 0,3 % en poids sur sec.

| Echantillons d'amidon cationique | 1 | 2 | 3 | 4 | 5 | 6 |
|---|---|---|---|---|---|---|
| Rétention toile (en %) | 82,6 | 85,4 | 84,9 | 83,9 | 83,7 | 83,9 |
| Rétention charges (en %) | 72,6 | 73,9 | 72,9 | 73 | 74,1 | 74,1 |

On peut constater que les amidons cationiques permutés avec des phosphates (essais 3 à 6) entraînent une légère amélioration des caractéristiques de rétention par rapport à l'échantillon 1 témoin correspondant à un amidon cationique traditionnel avec chlorures.

b) circuit long

L'amidon cationique représente 1,5 % en poids sur sec de la pâte

| Echantillons d'amidon cationique | 1 | 2 | 3 | 4 | 5 | 6 |
|---|---|---|---|---|---|---|
| Rétention toile (en %) | 82,1 | 81,8 | 82,1 | 82,2 | 82,1 | 81,5 |
| Rétention charges (en %) | 61,9 | 60,9 | 60,5 | 62,5 | 63,1 | 63,7 |

Les amidons cationiques phosphatés (essais 3 à 6) ne modifient pas les caractéristiques de rétention toile obtenues par rapport aux amidons cationiques avec contre-anions chlorures.

En revanche, les amidons cationiques permutés avec du phosphate disodique augmentent la rétention charges par rapport au témoin.

2) Essais en milieu acide

a) circuit court (amidon cationique dosé à 0,3 % en poids sur sec)

| Echantillons d'amidon cationique | 1 | 2 | 3 | 4 | 5 | 6 |
|---|---|---|---|---|---|---|
| Rétention toile (en %) | 82,3 | 84 | 84,3 | 83,9 | 83,8 | 84,3 |
| Rétention charges (en %) | 73,4 | 77 | 75,9 | 74,2 | 74,6 | 74,8 |

Il apparaît que les amidons cationiques obtenus conformément à l'invention (essais 3 à 6) augmentent favorablement la rétention toile et la rétention charges par rapport au témoin chlorures (1).

b) circuit long (amidon cationique dosé à 1,5 % en poids sur sec)

| Echantillons d'amidon cationique | 1 | 2 | 3 | 4 | 5 | 6 |
|---|---|---|---|---|---|---|
| Rétention toile (en %) | 77,5 | 77,3 | 77 | 77,7 | 78,3 | 78 |
| Rétention charges (en %) | 70,1 | 69,5 | 70 | 70 | 69,3 | 64,7 |

Les amidons cationiques phosphatés induisent des caractéristiques de rétention toile et de rétention charges au moins aussi bonnes que celles obtenues avec un amidon classique à contre-anions chlorures.

Les résultats obtenus dans cet exemple d'application montrent que les amidons cationiques dont les anions chlorures associés ont été substitués par des phosphates conformément à l'invention présentent des propriétés équivalentes, voire améliorées par rapport à celles d'amidons cationiques à contre-anions chlorures employés jusqu'alors.

En outre, l'un des avantages essentiels de ces amidons est leur caractère non corrosif. Les équipements utilisés en papeterie ne sont donc pas altérés par les contre-anions, en l'occurrence les phosphates.

Les amidons cationiques obtenus par le procédé conforme à l'invention peuvent ainsi être avantageusement employés dans l'industrie du papier.

**Revendications**

1. Procédé de permutation ionique d'amidon modifié avec des substituants ioniques associés à des contre-ions, caractérisé par le fait qu'il consiste à effectuer la permutation des contre-ions en une seule étape de lavage de l'amidon sous forme solide granulaire, à l'aide d'une solution contenant un ou plusieurs ions permutants aptes à remplacer en tout ou partie les contre-ions, ces ions permutants étant des cations et/ou des anions de nature organique et/ou inorganique choisis, en ce qui concerne les anions, dans le groupe comprenant les ions halogénure, nitrate, nitrite, sulfate, sulfite, thiosulfate, acétate, adipate, citrate, gluconate, p-tosylate, formiate, propionate, phosphate, borate, thiocyanate et sulfonate, et en ce qui concerne les cations, dans le groupe comprenant les ions sodium, potassium, magnésium, calcium, baryum, manganèse, fer, nickel et plomb.

2. Procédé selon la revendication 1, caractérisé en ce que la solution de lavage est constituée au moins partiellement par de l'eau, additionnée éventuellement d'un ou plusieurs solvants non aqueux choisis notamment parmi les alcools ou les cétones.

3. Procédé selon la revendication 2, caractérisé en ce que l'eau de la solution de lavage présente une teneur réduite en ions de nature différente de celle des ions permutants utilisés.

4. Procédé selon l'une quelconque des revendications 1 à 3, caractérisé en ce que la substitution des contre-ions de l'amidon modifié est supérieure ou égale à 70 %, et en ce que le rapport stoechiométrique molaire ions permutants/contre-ions est supérieur ou égal à 1:1.

5. Procédé selon la revendication 4, caractérisé en ce que la substitution des contre-ions de l'amidon modifié est totale et en ce que le rapport stoechiométrique molaire ions permutants/contre-ions est compris entre 1,1:1 et 1,3:1.

6. Procédé selon l'une quelconque des revendications 1 à 5, caractérisé en ce que la permutation s'effectue par l'intermédiaire d'un lavage consistant à mettre en contact la solution de lavage avec l'amidon ionisé, puis à soumettre ce mélange à une séparation par gradient de densité de manière à récupérer la solution de lavage enrichie en contre-ions extraits et l'amidon ionisé granulaire en équilibre avec les ions permutants.

7. Procédé selon la revendication 6, caractérisé en ce que l'opération de lavage est effectuée à l'aide d'au moins un hydrocyclone de façon à obtenir un surnageant (over-flow) contenant des contre-ions et un culot (under-flow) constitué par l'amidon au moins partiellement permuté.

8. Procédé selon la revendication 7, caractérisé en ce que l'opération de lavage est effectuée sur une batterie d'hydrocyclones montés en série et équipés d'un circuit de circulation de solution de lavage à contre-courant.

9. Procédé selon la revendication 6, caractérisé en ce que l'opération de lavage est effectuée à l'aide d'au moins un dispositif du type centrifugeuse ou décanteuse, apte à mélanger la solution de lavage et l'amidon modifié à permuter et à séparer une solution enrichie en contre-ions extraits constituant le surnageant, de l'amidon au moins partiellement permuté constituant le culot.

10. Procédé selon l'une quelconque des revendications 1 à 5, caractérisé en ce que l'opération de lavage consiste à faire migrer la solution de lavage au travers d'une masse d'amidon modifié à permuter.

11. Procédé selon la revendication 10, caractérisé en ce que l'on a recours à un filtre tambour rotatif sous vide ou à un dispositif du type essoreuse équipé de moyens de pulvérisation de la solution de lavage.

**12.** Procédé selon l'une quelconque des revendications 1 à 11, caractérisé en ce que l'amidon modifié mis en oeuvre est un amidon cationique obtenu par réaction en milieu alcalin d'un amidon granulaire avec un réactif cationique dont le contre-anion est un halogénure.

**13.** Procédé selon la revendication 12, caractérisé en ce que le contre-anion est un chlorure.

**Patentansprüche**

**1.** Verfahren zum Ionenaustausch von Stärke, die durch ionische, mit Gegenionen assoziierte Substituenten modifiziert ist, dadurch gekennzeichnet, daß es darin besteht, den Austausch der Gegenionen in einer einzigen Stufe des Waschens der Stärke in körniger, fester Form mit Hilfe einer Lösung durchzuführen, die ein oder mehrere Austauschionen enthält, die ihrerseits fähig sind, ganz oder teilweise die Gegenionen zu ersetzen, wobei diese Austauschionen Kationen und/oder Anionen mit organischer und/oder anorganischer Beschaffenheit sind, die gewählt werden, was die Anionen betrifft, aus der die Ionen Halogenid, Nitrat, Nitrit, Sulfat, Sulfit, Thiosulfat, Acetat, Adipat, Citrat, Gluconat, p-Tosylat, Formiat, Propionat, Phosphat, Borat, Thiocyanat und Sulfonat, und was die Kationen betrifft, aus der die Ionen Natrium, Kalium, Magnesium, Calcium, Barium, Mangan, Eisen, Nickel und Blei umfassenden Gruppe.

**2.** Verfahren nach Anspruch 1, dadurch gekennzeichnet, daß die Waschlösung mindestens teilweise aus Wasser besteht, dem gegebenenfalls ein oder mehrere nichtwäßrige Lösungsmittel zugesetzt sind, insbesondere ausgewählt unter den Alkoholen oder den Ketonen.

**3.** Verfahren nach Anspruch 2, dadurch gekennzeichnet, daß das Wasser der Waschlösung einen reduzierten Gehalt an den Ionen aufweist, deren Beschaffenheit sich von denen zum Austausch verwendeten unterscheidet.

**4.** Verfahren nach irgendeinem der Ansprüche 1 bis 3, dadurch gekennzeichnet, daß die Substitution der Gegenionen der modifizierten Stärke höher oder gleich 70 % ist, und daß das molare stöchiometrische Verhältnis Austauschionen/Gegenionen höher oder gleich 1:1 liegt.

**5.** Verfahren nach Anspruch 4, dadurch gekennzeichnet, daß die Substitution der Gegenionen der modifizierten Stärke vollständig ist, und daß das molare stöchiometrische Verhältnis Austauschionen/Gegenionen zwischen 1,1:1 und 1,3:1 liegt.

**6.** Verfahren nach irgendeinem der Ansprüche 1 bis 5, dadurch gekennzeichnet, daß der Austausch über die Zwischenstufe einer Waschung erfolgt, die in dem In-Kontakt-Bringen der Waschlösung mit der ionisierten Stärke besteht, wonach man diese Mischung einer Trennung mittels des Dichte-Gradienten unterzieht, so daß man die mit den extrahierten Gegenionen angereicherte Waschlösung und die kornförmige ionisierte Stärke im Gleichgewicht mit den Austauschionen gewinnt.

**7.** Verfahren nach Anspruch 6, dadurch gekennzeichnet, daß der Arbeitsgang des Waschens mit Hilfe von mindestens einem Hydrozyklon in der Weise durchgeführt wird, daß man einen aufschwimmenden Anteil (over-flow), der die Gegenionen enthält, und einen Rückstand (under-flow) erhält, der durch die mindestens teilweise ausgetauschte Stärke gebildet wird.

**8.** Verfahren nach Anspruch 7, dadurch gekennzeichnet, daß der Arbeitsgang des Waschens mit Hilfe einer Gruppe von Hydrozyklonen durchgeführt wird, die in Reihe angeordnet und mit einem Kreislauf für die Umwälzung der Waschlösung im Gegenstrom versehen sind.

**9.** Verfahren nach Anspruch 6, dadurch gekennzeichnet, daß der Arbeitsgang des Waschens mit Hilfe von mindestens einer Vorrichtung vom Typ Zentrifuge oder Dekanter durchgeführt wird, die fähig sind, die Waschlösung und die auszutauschende, modifizierte Stärke zu mischen und eine an extrahierten Gegenionen angereicherte Lösung, die den aufschwimmenden Anteil bildet, von der mindestens teilweise ausgetauschten Stärke, die den Rückstand bildet, abzutrennen.

**10.** Verfahren nach irgendeinem der Ansprüche 1 bis 5, dadurch gekennzeichnet, daß der Arbeitsgang des Waschens darin besteht, die Waschlösung durch eine Masse von auszutauschender, modifizierter Stärke migrieren zu lassen.

11. Verfahren nach Anspruch 10, dadurch gekennzeichnet, daß man einen Vakuum-Drehtrommelfilter oder eine Vorrichtung vom Typ der Zentrifuge verwendet, ausgestattet mit Mitteln zum Versprühen der Waschlösung.

12. Verfahren nach irgendeinem der Ansprüche 1 bis 11, dadurch gekennzeichnet, daß die eingesetzte modifizierte Stärke eine kationische Stärke ist, erhalten durch Reaktion einer kornförmigen Stärke mit einem kationischen Reaktanden, dessen Gegenanion ein Halogenid ist, im alkalischen Medium.

13. Verfahren nach Anspruch 12, dadurch gekennzeichnet, daß das Gegenanion ein Chlorid ist.

**Claims**

1. Process for the ionic exchange of modified starch having ionic substituents associated with counter ions, characterised by the fact that it consists of performing the exchange of counter ions in a single step of washing the starch in solid granular form, by way of a solution containing one or more exchange ions capable of replacing part or all of the counter-ions, the exchange ions being organic and/or inorganic cations and/or anions selected, as far as the anions are concerned, from the group comprising halogen ions, nitrate, nitrite, sulfate, sulfite, thiosulfate, acetate, adipate, citrate, gluconate, p-tosylate, formate, propionate, phosphate, borate, thiocyanate and sulfonate, and as far as the cations are concerned, from the group comprising the ions of sodium, potassium, magnesium, calcium, barium, manganese, iron, nickel and lead.

2. Process according to claim 1, characterised in that the washing solution consists at least partially of water, with optional addition of one or more non-aqueous solvents selected in particular from alcohols or ketones.

3. Process according to claim 2, characterised in that the water of the washing solution has a reduced content of ions of a different nature from that of the exchange ions used.

4. Process according to any one of claims 1 to 3, characterised in that the substitution of the counter ions of modified starch is greater than or equal to 70%, and in that the molar stoichiometric ratio of exchange ions/counter ions is greater than or equal to 1:1.

5. Process according to claim 4, characterised in that there is total substitution of the counter ions of the modified starch and in that the molar stoichiometric ratio of exchange ions/counter ions is comprised between 1.1:1 and 1.3:1.

6. Process according to any one of claims 1 to 5, characterised in that the exchange is carried out by means of a washing consisting of bringing the washing solution into contact with the ionised starch, and then subjecting the resulting mixture to a separation by density gradient so as to recover the washing solution enriched with extracted counter ions and the granular ionised starch in equilibrium with the exchange ions.

7. Process according to claim 6, characterised in that the washing operation is carried out with the aid of at least one hydrocyclone so as to obtain an over-flow contaning counter ions and an under-flow consisting of at least partially exchanged starch.

8. Process according to claim 7, characterised in that the washing operation is carried out in a cascade of hydrocyclones arranged in series and equipped with a circuit for the circulation of washing solution in counter current.

9. Process according to claim 6, characterised in that the washing operation is carried out with the aid of at least one apparatus of the centrifugal or decanting type, capable of mixing the washing solution with the modified starch which is to be exchanged, and separating a solution enriched with extracted counter ions, constituting the over-flow, and the starch which is at least partially exchanged constituting the under-flow.

10. Process according to any one of claims 1 to 5, characterised in that the washing operation consists of causing the washing solution to travel through a mass of modified starch which is to be exchanged.

11. Process according to claim 10, characterised in that a rotary drum filter under vacuum or an apparatus such as a centrifugal dryer equipped with means for spraying the washing solution is used.

**12.** Process according to any one of claims 1 to 11, characterised in that the modified starch used is a cationic starch obtained by the reaction of a granular starch in an alkaline medium with a cationic reactant whose counter anion is a halide.

**13.** Process according to claim 12, characterised in that the counter anion is a chloride.